# EUROPÄISCHE PATENTSCHRIFT

(11) **EP 1 162 111 B1**
(45) Veröffentlichungstag und Bekanntmachung des Hinweises auf die Patenterteilung: **15.08.2007**
(21) Anmeldenummer: 00112328.0
(22) Anmeldetag: 08.06.2000
(51) Int. Cl.: B60P 1/44

(54) **Ladebordwandsystem mit Schiebeeinheit**
Loading tailgate system with sliding unit
Système de hayon élévateur avec unité de glissement

(43) Veröffentlichungstag der Anmeldung: 12.12.2001
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole

(56) Entgegenhaltungen:
- EP-A- 0 786 374
- EP-A- 0 941 896
- EP-B- 0 662 405
- FR-A- 2 760 216
- GB-A- 2 207 113

## Beschreibung

Die Erfindung betrifft ein Ladebordwandsystem zur Befestigung an Fahrzeugen, insbesondere Lastkraftfahrzeugen, umfassend wenigstens ein aus zwei im wesentlichen parallel voneinander beabstandeten Tragwerken bestehendes Hubtragwerk, eine im wesentlichen plattenförmige Ladebordwand zum Heben und Absenken einer Last, wenigstens eine Hubaktuatoreinrichtung zum Heben und Senken der Ladebordwand sowie eine am Tragrahmen des Fahrzeugs befestigbare Schiebeeinheit, an der wenigstens das Hubtragwerk, die Ladebordwand und die Hubaktuatoreinrichtung im wesentlichen in Fahrzeuglängsrichtung auszieh- und einschiebbar befestigt sind, die wenigstens zwei im wesentlichen parallel voneinander beabstandete, als Träger wenigstens des Hubtragwerks, der Ladebordwand und der Hubaktuatoreinrichtung ausgebildete, in Auszieh- und Einschiebrichtung verschiebbare Schiebeelemente umfaßt, und die wenigstens in Ausziehrichtung der Schiebeelemente wirkende, deren Ausziehhub begrenzende Anschläge aufweist.

Ein Ladebordwandsystem dieser Art ist bekannt (EP-B-0 662 405). Ladebordwandsysteme dieser Art sind in den verschiedensten Ausführungsformen bekannt und finden insbesondere Anwendung bei Lastkraftfahrzeugen, um mit den Lastkraftfahrzeugen zu transportierende Lasten am Einsatzort von der Ladeplattform des Lastkraftfahrzeuges auf die Fahrbahn, auf der das Lastkraftfahrzeug steht, absenken zu können, so daß die Last dann anderweitig zum Bestimmungsort verbracht werden kann. Das gleiche gilt für den Beladungsvorgang eines Kraftfahrzeuges, d.h. die Last wird auf die sich auf der Fahrbahnebene befindende Ladebordwand aufgebracht, die Ladebordwand wird auf die Höhe der Ladeplattform des Lastkraftfahrzeuges angehoben und nachfolgend auf die Ladeplattform verbracht.

Bei einigen Ladebordwandsystemen, die neben der Hubaktuatoreinrichtung auch eine Klappaktuatoreinrichtung aufweisen, d.h. auch ein entsprechendes Klapptragwerk, wird dann, wenn der Entlade- bzw. Beladevorgang beendet ist, die Ladebordwand aus der Horizontalen, in der sie sich zum Be- und Entladen befindet, in die Vertikale verschwenkt, so daß die Ladebordwand auch als rückwärtiger Abschluß der Ladefläche bzw. eines kofferartig ausgebildeten Laderaums dienen kann.

Bei einer anderen Art eines Ladebordwandsystems ist, wie gesagt, lediglich eine Hubaktuatoreinrichtung und somit auch nur ein Hubtragwerk vorgesehen, oder es ist ebenfalls neben dem Hubtragwerk und der Hubaktuatoreinrichtung auch eine Klappaktuatoreinrichtung und ein Klapptragwerk vorgesehen, wobei aber das Klapptragwerk in Verbindung mit der Klappaktuatoreinrichtung lediglich eine einige Grad große Schwenkbewegung (Klappbewegung) der Ladebordwand ausführen muß, um bei auf der Fahrbahnebene abgesenkter Ladebordwand deren freies Ende zur Anlage auf die Fahrbahn abkippen zu können, um die auf die Ladebordwand zu verbringende bzw. von dieser abzuladenden Last störende ohne Stufe handhaben zu können. Regelmäßig ist die letztgenannte Ausgestaltung des Ladebordwandsystems, ob nun gänzlich ohne Klappaktuatoreinrichtung und Klapptragwerk oder mit Klappaktuatoreinrichtung und Klapptragwerk derart ausgestaltet, daß die Ladebordwand, anders als bei den oben zuerst genannten Ladebordwandsystemen, bei der die Ladebordwand als im wesentlichen durchgehendes plattenförmiges Element ausgebildet ist, in etwa mittig längs einer Achse quer zur Fahrzeuglängsrichtung faltbar, um ihre Ausdehnung in Fahrzeuglängsrichtung auf ca. die Hälfte zu vermindern. So kann die Ladebordwand, die an der gattungsgemäß genannten Schiebeeinheit befestigt ist, unter das Fahrzeug geschoben werden, so daß das Ladebordwandsystem während des Fahrens des Fahrzeuges nicht über die das Fahrzeug begrenzenden Konturen nach hinten heraussteht. Derartige Systeme, die auch Faltladebordwandsysteme genannt werden, befinden sich, wie eingangs schon angedeutet, in den verschiedensten Ausgestaltungen im Einsatz.

In nahezu allen denkbaren Fällen werden diese Ladebordwandsysteme zusammen mit der Herstellung der Karosserie eines karosserielos gelieferten Fahrzeuges nachträglich an das Fahrzeug angebaut. Die Hersteller von Ladebordwandsystemen einerseits sind regelmäßig nicht die Hersteller von Karosserien für Fahrzeuge und, insbesondere bei Lastkraftfahrzeugen, auch nicht die Hersteller der Lastkraftfahrzeuge selbst. Zudem ist es bekannt, daß das Chassis unterschiedlicher Kraftfahrzeuge unterschiedlicher Hersteller gewöhnlich sehr unterschiedlich ist, so daß aufwendige Adaptionsvorrichtungen vorgesehen werden müssen, um fahrzeugtypisch spezialisiert das Ladebordwandsystem mit dem Fahrzeug verbinden zu können. Je nach Fahrzeugtyp werden derartige Ladebordwandsysteme unmittelbar unter die die Ladeplattform bildende Konstruktion montiert, bisweilen auch an den Achsen oder sonstigen Befestigungsorten.

Die bekannten Befestigungsorte für das gattungsgemäße Ladebordwandsystem erfordern gesonderte, aufwendig auszubildende Anpassungseinrichtungen, insbesondere dann, wenn derartige Ladebordwandsysteme unmittelbar unter die Ladeplattform des Fahrzeuges montiert werden. Zudem bieten die bisherigen Ladebordwandsysteme einen geringen Schutz gegen mögliche, auf das mit dem gattungsgemäßen Ladebordwandsystem ausgerüstete Fahrzeuge einwirkende Kräfte, wie sie beispielsweise durch ein auffahrendes Fahrzeug hervorgerufen werden, d.h. ein Auffahrunfall führt bisher regelmäßig zur vollständigen Zerstörung des Ladebordwandsystems und vielfach auch zu sehr umfangreichen Schäden des Fahrzeuges selbst, an dem das Ladebordwandsystem angebracht ist.

Es ist somit Aufgabe der vorliegenden Erfindung, ein Ladebordwandsystem der eingangs genannten Art zu schaffen, das auf einfache Weise an ein Kraftfahrzeug montiert werden kann, ohne daß dazu aufwendige Montagekonstruktionen, angepaßt an die unterschiedlichen Fahrzeugtypen und die unterschiedlichen bisherigen Orte der Montage, nötig sind, und das nachträglich an im Einsatz befindliche Fahrzeuge montiert werden kann, ohne daß grundsätzliche Umbau- und Anpassungsmaßnahmen vorgesehen werden müssen, das einfach und kostengünstig herstellbar ist und schnell und einfach montierbar ist.

Gelöst wird die Aufgabe gemäß der Erfindung dadurch, daß die Anschläge jeweils ein quer zur Ausziehrichtung ausgerichtetes Loch aufweisen, in das bei maximalem Ausziehhub ein jeweils den Schiebeelementen ausgebildeter Tragstift eingreift.

Der Vorteil 1 der erfindungsgemäßen Lösung besteht im wesentlichen darin, daß der Tragrahmen eine weitgehend kraftschlüssige Montage des Ladebordwandsystems ermöglicht. Zudem besteht das Chassis bei Fahrzeugen regelmäßig aus Tragrahmen, bei denen die gattungsgemäßen Ladebordwandsysteme verwendet werden, d.h. aus Trägerelementen, die das gesamte Fahrzeug in Längsrichtung überspannen, wobei an diesen Trägerelementen regelmäßig auch die Achsen des Fahrzeuges sowie das Antriebsaggregat des Fahrzeuges befestigt sind. Insofern ist der Tragrahmen ein außerordentlich geeigneter Anbringungsort für die Schiebeeinheit. Zudem können alle auf das Ladebordwandsystem einwirkenden Kräfte aufgrund der erfindungsgemäß vorgeschlagenen Lösung ohne Umweg direkt in den Tragrahmen des Fahrzeuges eingeleitet werden. Dadurch ergibt sich eine sehr sichere Verbindung zwischen der Schiebeeinheit bzw. des Ladebordwandsystems in seiner Gesamtheit und dem Tragrahmen des Fahrzeuges. Obwohl der Tragrahmen derartiger Fahrzeuge unterschiedlicher Hersteller nicht genormt ist, ist eine Anpassung bzw. Verbindung der Schiebeeinheit mit dem Tragrahmen von Fahrzeugen auch unterschiedlicher Hersteller doch insoweit ohne grundlegende Konstruktionsänderungen bzw. Anpassung möglich, da das konstruktive Prinzip der Tragrahmen bei derartigen Fahrzeugen, wie schon eingangs erwähnt, gleich ist, so daß eine problemlose Montage bzw. Anpassung der Schiebeeinheit an das Fahrzeug, wie angestrebt, schnell möglich ist.

Dadurch, daß die Schiebeeinheit in Fahrzeuglängsrichtung wenigstens in Ausziehrichtung der Schiebeelemente wirkende, deren Ausziehhub in Fahrzeuglängsrichtung begrenzende Anschläge aufweist, wird sichergestellt, daß die Schiebeelemente nicht über den 0rt der Anschläge hinaus vom Fahrzeug weg bzw. aus ihm hervor herausgezogen werden können.

Die Anschläge haben aber vorteilhafterweise auch noch eine weitere Funktion, nämlich die der Aufnahme und Überleitung der Kraft, die im herausgezogenen Zustand der Schiebeelemente insbesondere bei dem bestimmungsgemäßen Gebrauch der Ladebordwand auf die Ladeplattform beim Be- und Entladen auf diese einwirkt, d.h. die von der Ladeplattform über die Tragwerke in die Schiebeelemente eingeleiteten Kräfte zusätzlich über die Anschläge in den feststehenden Teil der Schiebeeinheit einzuleiten und von dort in das Chassis des Fahrzeugs, an dem das gesamte Ladebordwandsystem befestigt ist. Dazu weisen die Anschläge das in Fahrzeuglängsrichtung ausgerichtete Loch auf, in das bei maximalem Ausziehhub an den Schiebeelementen ausgebildete Tragstifte eingreifen.

Bei einer vorteilhaften Ausgestaltung der Erfindung ist die Schiebeeinheit über wenigstens eine Traverse, die den Abstand zwischen zwei den Tragrahmen im wesentlichen bildenden Trägern überspannt, an dem Tragrahmen befestigt. Diese außerordentlich einfache aber sehr effektive Befestigung der Schiebeeinheit erlaubt die jeweilige Anpassung an die den Tragrahmen des Fahrzeuges in diesem Falle bildenden, voneinander beabstandeten beiden Trägern derart, daß die Traverse lediglich auf die geeignete Länge entsprechend dem lichten Abstand der beiden Träger angepaßt zu werden braucht, ohne daß weitere Maßnahmen der Anpassung erforderlich sind.

Gemäß einer weiteren vorteilhaften Ausgestaltung der Erfindung weist die Traverse an ihren beiden Enden mit der Traverse verbundene Stirnelemente auf, über die die Traverse an den den Tragrahmen bildenden Trägern befestigt ist. Um dabei an dem Tragrahmen des Fahrzeuges keine die Festigkeit des Tragrahmens beeinträchtigende Schweißverbindungen vornehmen zu müssen, weisen die Stirnelemente eine Mehrzahl von Löchern auf, die zur Aufnahme von Bolzen dienen, über die die Schiebeeinheit bzw. die Traverse der Schiebeeinheit an den Tragrahmen lösbar befestigbar ist.

Bei einer anderen vorteilhaften Ausgestaltung des Ladebordwandsystems kann die Schiebeeinheit über klauenartig ausgebildete Klemmelemente, die über horizontale Stege der den Tragrahmen bildenden Trägern greifen, lösbar befestigbar sein. Eine derartige vorteilhafte Befestigungsmöglichkeit kann immer dann sinnvoll sein, wenn die den Tragrahmen bildenden voneinander beabstandeten Träger beispielsweise im Querschnitt als U-profilförmige oder als doppelt-T-profilförmige Träger ausgebildet sind. Die klauenartig ausgebildeten Klemmelemente greifen dann über die zur Fahrbahnebene im wesentlichen parallel ausgebildeten Stege derart im Querschnitt geformter Träger.

Besonders vorteilhaft ist es, die Traverse längenverschiebbar auszubilden, beispielsweise derart, daß diese teleskopartig ausgebildet ist, so daß ohne zusätzliche fertigungstechnische Maßnahmen eine Anpassung an unterschiedlich voneinander beabstandete Träger des Tragrahmens möglich ist.

Vorteilhaft ist es, die Traverse an der Schiebeeinheit derart zu befestigen, daß diese sich bei Krafteinwirkung im wesentlichen in Fahrzeuglängsrichtung bei Überschreiten eines vorbestimmten Kraftbetrages gegenüber dem Tragrahmen im wesentlichen in Fahrzeuglängsrichtung bewegen kann. Auf diese Weise kann innerhalb eines bestimmten Betrages die Energie eines auf das am Kraftfahrzeug befestigte Ladebordwand auffahrenden anderen Fahrzeuges wenigstens teilweise absorbiert werden und der nicht absorbierte Betrag in den Tragrahmen des Fahrzeuges eingeleitet werden. Eine derartige Energieabsorption kann vorteilhafterweise dadurch erreicht werden, daß die Schiebeeinheit an ihrer zur Traverse gerichteten Seite wenigstens zwei gegenüberliegend voneinander beabstandete Schenkel aufweist, in der Langlöcher zur Befestigung der Traverse ausgebildet sind. Diese Langlöcher haben dabei eine doppelte Funktion, d.h. sie gestatten einmal die Verschiebung der Schiebeeinheit relativ zur Traverse bei Überschreiten einer vorbestimmten Kraft, die durch entsprechende Einstellung des Sitzes einer Befestigungsmutter auf einem Bolzen eingestellt wird, der durch die Traverse und durch die Langlöcher hindurchgreift, und sie gestatten auch einen Ausgleich der Maßtoleranzen zwischen den den Tragrahmen bildenden Trägern.

Die Schiebeeinheit selbst ist vorteilhafterweise derart gestaltet, daß die Träger als relativ zum Fahrzeug feststehende Führungselemente ausgebildet sind und die wenigstens zwei im wesentlichen parallel voneinander beabstandeten, als Träger ausgebildeten, relativ zum Fahrzeug längsverschiebbaren Schiebeelemente, in den Führungselementen geführt hin und her bewegbar sind. Dabei bilden vorzugsweise die Führungselemente gleichzeitig einen wesentlichen Teil der Tragkonstruktion der Schiebeeinheit, d.h. die Führungselemente sind gleichzeitig Trägerelemente der Schiebeeinheit.

Grundsätzlich können die Führungselemente in beliebig geeigneter Form ausgebildet sein, um darin die Schiebeelemente geeignet zu führen und auf die Schiebeelemente einwirkende vertikale Kräfte bzw. Kraftkomponenten aufzunehmen, wenn die Ladebordwand aktiv ist, beispielsweise beim Heben und Senken der Ladeplattform. Vorteilhafterweise ist das Führungselement dazu derart gestaltet, daß es einen im wesentlichen C-förmigen Querschnitt aufweist, so daß ein entsprechend ausgebildetes Schiebeelement im Führungselement vorzugsweise gleitend im so gebildeten, teilweise seitlich offenen Führungskanal im Führungselement geführt werden kann.

Um das Hin- und Herschieben der Schiebeelemente in den Führungselementen jedoch noch zu erleichtern, d.h. eine möglichst große Reduzierung der Reibung zu erreichen, werden vorzugsweise die Schiebeelemente in den Führungselementen über an den Schiebeelementen befestigte Radelemente geführt, d.h. die Radelemente rollen im in vertikaler Richtung beidseitig durch die C-förmig im Querschnitt ausgebildeten Führungselemente gebildeten seitlich offenen Führungsraum.

Um den Sitz der Tragstifte in den Löchern bei maximalem Ausziehhub der Schiebeelemente zu verbessern bzw. optimal zu gestalten, sind die Löcher und die Tragstifte in Längsrichtung konisch ausgebildet, was gleichzeitig auch zum Ausgleich von Toleranzen sowohl in den Führungselementen als auch in den darin gleitenden oder rollenden Schiebeelementen beiträgt, d.h. die konisch ausgebildeten Tragstifte werden auch beim Eintritt in die Löcher geführt, bis sie ihren endgültigen Sitz in den Löchern erreicht haben.

Um auch in Fahrzeuglängsrichtung auftretende Toleranzen der Schiebeeinheit bzw. der Führungselemente und der darin hin- und herbewegbar aufgenommenen Schiebeelemente auszugleichen, was zudem auch baulichen Gegebenheiten Rechnung trägt, die bei dem Chassis des Fahrzeugs zu beachten sind, an dem das Ladebordwandsystem zu befestigen ist, sind die Anschläge in Fahrzeuglängsrichtung verstellbar angeordnet, wobei dafür in den Führungselementen beispielsweise Langlöcher vorgesehen sind, durch die beispielsweise Bolzen greifen können, die in entsprechende Gewindelöcher der Anschläge greifen.

Es ist ebenfalls vorteilhaft, daß die Schiebeeinheit in Fahrzeuglängsrichtung wenigstens in Hineinschubrichtung der Schiebeelemente wirkende, deren Hineinschiebhub begrenzende Hinteranschläge aufweist. Grundsätzlich können auch die Hinteranschläge relativ zur Schiebeeinheit bzw. relativ zu den Führungselementen verstellbar angeordnet sein, um aus gleichem Grunde wie vorangehend dargelegt zu den vorderen Anschlägen eine Einstellmöglichkeit haben.

In bestimmten Staaten ist es aufgrund gesetzlicher Vorschriften zwingend erforderlich, daß das Kraftfahrzeug konstruktiv so ausgestaltet ist, daß es energieabsorbierende Zonen aufweist. Man spricht in diesem Zusammenhang von sogenannten Knauschzonen, um kinetische Energie, bedingt durch ein auf das Fahrzeug auffahrendes Fahrzeug, zu absorbieren. Diese Vorschrift gilt auch für Teile und Zusatzausrüstungen, wie das erfindungsgemäße Ladebordwandsystem, das mit dem Fahrzeug auf erfindungsgemäße Weise befestigt wird. Um diese sicherheitstechnische und vielfach gesetzlich vorgeschriebene Vorgabe zu erfüllen, ist das Ladebordwandsystem vorteilhafterweise derart ausgestaltet, daß die Hinteranschläge bei Krafteinwirkung durch die Schiebeelemente oberhalb eines vorbestimmten Energiebetrages in Fahrzeuglängs-. richtung inelastisch verformbar ausgebildet sind. Über diese verhältnismäßig einfache Maßnahme ist, wie Versuche ergeben haben, eine den gesetzlichen Bestimmungen genügende und sogar darüber hinausgehende Energieabsorption erreichbar.

Es gibt gattungsgemäße Ladebordwandsysteme, bei denen manuell die Schiebeeinheit unter das Fahrzeug geschoben werden kann bzw. aus seiner Ruheposition unterhalb des Fahrzeuges herausgezogen werden kann. Obwohl das Bestreben bei derartigen Ladebordwandsystemen fortwährend ist, diese bei uneingeschränkter Stabilität im Gewicht immer leichter auszubilden, um das Leergewicht des derart ausgerüsteten Fahrzeuges noch weiter zu vermindern, ist konstruktionsbedingt immer noch ein solches Mindestgewicht auch gewichtsreduzierter Ladebordwandsysteme der gattungsgemäßen Art zu verzeichnen, die ein manuelles Hin- und Herschieben der Schiebeeinheit dennoch nur mit beträchtlichem manuellen Kraftaufwand ermöglicht. Vorteilhaft ist es deshalb, die Schiebeeinheit mittels eines Schiebeaktuators hin und her bewegbar auszubilden, wobei der Schiebeaktuator vorzugsweise durch wenigstens ein pneumatisch und/oder hydraulisch betriebenes Kolben-Zylinder-System gebildet wird. Grundsätzlich ist es aber auch möglich, einen elektrisch betriebenen Schiebeaktuator vorzusehen. Zu dessen Betrieb kann beispielsweise das immer vorhandene elektrische Ortnetz des Fahrzeuges herangezogen werden. Bei dafür vorgesehenen pneumatisch und/oder hydraulisch betriebenen Kolben-Zylinder-Systemen kann das bei Fahrzeugen, insbesondere bei Lastkraftfahrzeugen, regelmäßig vorhandene pneumatische und/oder auch hydraulische System des Fahrzeuges herangezogen werden, oder aber ein pneumatisches und/oder hydraulisches System kann Verwendung finden, das regelmäßig für die Hub- und Senkbewegung der Ladebordwand und ggf. auch der Klappbewegung der Ladebordwand gesondert vom entsprechenden pneumatischen und/oder hydraulischen System des Fahrzeuges erzeugt wird.

Um ein möglichst paralleles Anheben der Tragwerke bei der Hubbewegung und ggf. auch bei der Klappbewegung der Ladebordwand zu erreichen, was insbesondere dann von Wichtigkeit ist, wenn lediglich ein Hubaktuator, der lediglich auf ein Tragwerk aktiv wirkt, vorhanden ist, ist vorteilhafterweise ein die Tragwerke miteinander kraftschlüssig verbindender Querträger vorgesehen, wobei der Querträger im Bereich der der Schiebeeinheit abgewandten Enden der Tragwerke angeordnet ist.

Der Querträger ist dabei als Auffahrschutzelement ausgebildet, kann also neben der Erhöhung der Parallelführung der beiden Tragwerke ebenfalls als Element Verwendung finden, um innerhalb vorbestimmter Beträge die Energie eines auf das Ladebordwandsystem auffahrenden Fahrzeuges aufzunehmen und über die Tragwerke in die Schiebeeinheit und von dort über die Traverse in den Tragrahmen des Fahrzeuges einzuleiten.

Der Querträger kann im Prinzip eine beliebige geeignete Querschnittsform aufweisen. Um aber auch eine Torsion des Querträgers so weit wie möglich zu vermeiden, d.h. insbesondere für die Parallelführung der beiden Tragwerke beim Anheben und Absenken der Ladebordwand zu sorgen, weist der Querträger einen im wesentlichen rechteckigen Querschnitt auf, wobei vorzugsweise der Querträger an seinen beiden Enden mit jeweils einem Flanschsteg versehen ist, über die er jeweils an einem Tragwerk befestigt ist. Die Tragwerke lassen sich bei dieser Ausgestaltung somit, da sie gesonderte Teile sind, bei Beschädigung oder Zerstörung leicht austauschen, was gleichermaßen auch für den so ausgebildeten Querträger möglich ist.

Die Erfindung wird nun unter Bezugnahme auf die beigefügten Zeichnungen anhand eines Ausführungsbeispieles im einzelnen beschrieben. Darin zeigen:
- Fig. 1: in perspektivischer Darstellung das Ladebordwandsystem in kompletter Form unter Weglassung des Tragrahmens des Fahrzeuges, an dem das Ladebordwandsystem befestigt wird,
- Fig. 2: in perspektivischer Darstellung die Schiebeeinheit des Ladebordwandsystems unter Weglassung von Einzelheiten,
- Fig. 3: in perspektivischer Darstellung ein Schiebeelement, das in Führungselementen der Schiebeeinheit hin und her bewegbar ist, wobei am Schiebeelement ein Tragwerk und ein Hubaktuator oder ein Klappaktuator angreift (nicht dargestellt),
- Fig. 4: in perspektivischer Darstellung die Schiebeeinheit des Ladebordwandsystems unter Weglassung von Einzelheiten, jedoch vordere und hintere Anschlagelemente für die Schiebeelemente zeigend,
- Fig. 5a: in perspektivischer Darstellung ein Schiebeelement, das in Führungselementen der Schiebeeinheit hin- und herbewegbar ist, jedoch mit Rollenelementen versehen, die in den Führungselementen rollbar aufgenommen sind,
- Fig. 5b: ein zweites, spiegelbildlich zum in 5a ausgebildeten Schiebeelement,
- Fig. 6: in perspektivischer Darstellung das Ladebordwandystem unter Weglassung der Ladebordwand, wobei sich die Schiebeelemente in einer mittleren Stellung zwischen vorderem und hinterem Anschlag befinden,

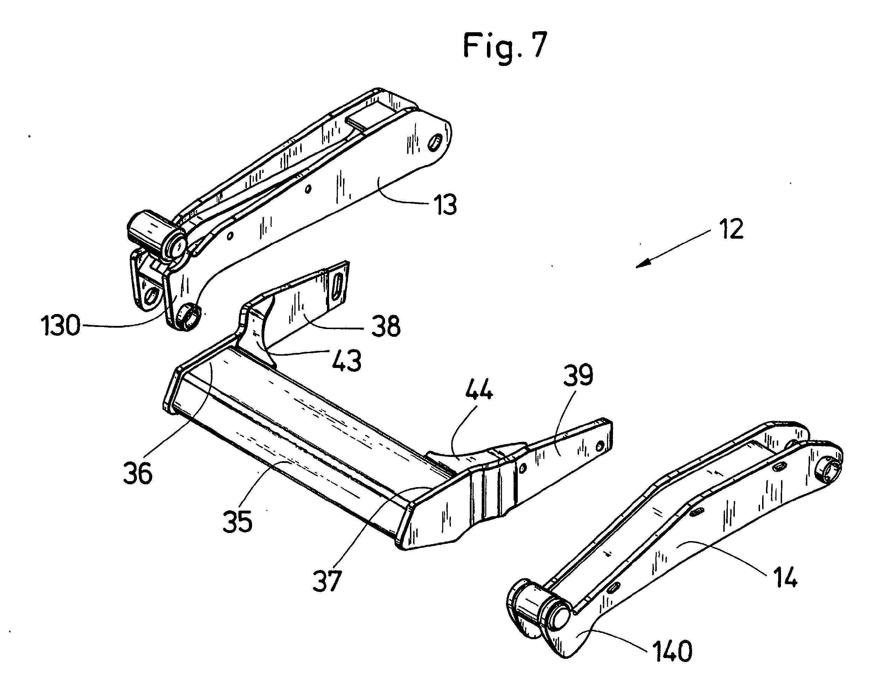

- Fig. 7: in perspektivischer Darstellung die beiden Tragwerke des Ladebordwandsystems, die das Hubtragwerk, ggf. auch das Klapptragwerk, bilden und ein beide Tragwerke verbindender Querträger in auseinandergezogener Darstellung,
- Fig. 8: das Ladebordwandsystem gemäß Fig. 1 in perspektivischer Darstellung, jedoch unter Weglassung der Ladebordwand und des Schiebeaktuators, jedoch mit sichtbar an den Enden der Tragwerke ausgebildetem Querträger,
- Fig. 9: das Ladebordwandsystem gemäß den Fig. 1 und 9 in perspektivischer Darstellung, wobei die Befestigung an zwei voneinander im wesentlichen parallel beabstandeten, das Chassis eines fahrzeugbildenden doppelt-T-Trägern erfolgt,
- Fig. 10: das Ladebordwandsystem gemäß Fig. 1 und 9 in perspektivischer Darstellung, wobei die Befestigung am Chassis des Fahrzeugs mittels Laschen erfolgt, die über die unteren, im wesentlichen horizontal ausgebildeten Stege der doppelt-T-Träger greifen,
- Fig. 11: eine Seitenansicht des Führungselements,
- Fig. 12: eine Ansicht auf die Stirnseite des Führungelements gemäß Fig. 11,
- Fig. 13: eine Seitenansicht auf ein Rollenelement, das in den Führungselementen geführt und darin rollbar aufgenommen wird, und
- Fig. 14: in der Seitenansicht das hintere Ende eines Chassis eines Fahrzeuges, an dem das Ladebordwandsystem befestigt ist, schematisch eine inelastische Verformung des hinteren Anschlags der Schiebeelemente darstellend.

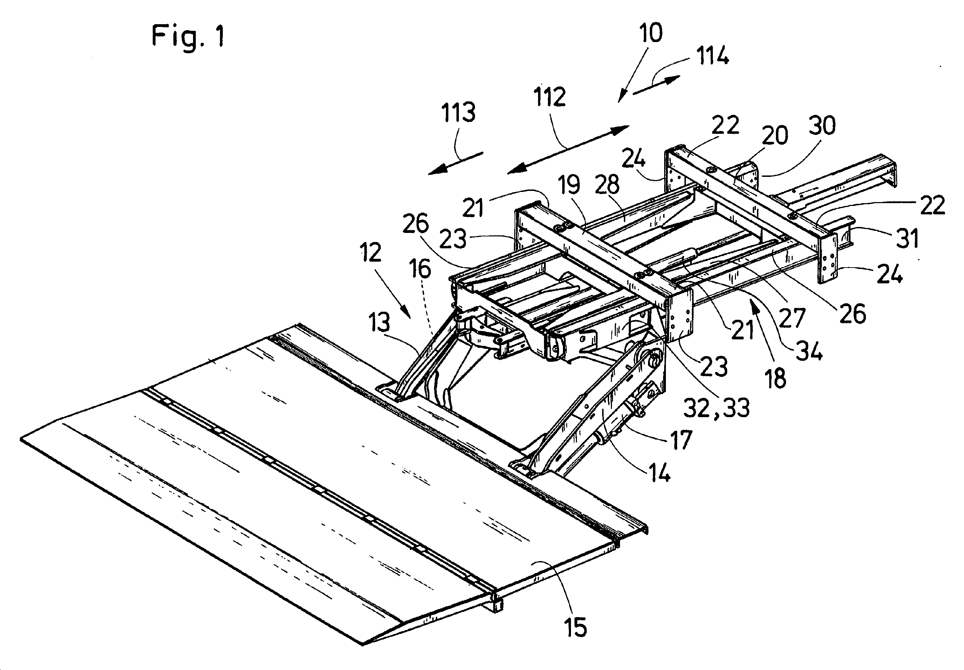

Es wird zunächst Bezug genommen auf die Darstellung von Fig. 1, in der das Ladebordwandsystem 10 zur Befestigung an Fahrzeugen 11, insbesondere Lastkraftfahrzeugen, komplett dargestellt ist. Aus Übersichtlichkeitsgründen ist auf eine detaillierte Darstellung des Fahrzeugs 11 in den Fig. verzichtet worden und, soweit erforderlich, in den Fig. lediglich durch entsprechende Linien des das Chassis des Fahrzeugs 11 bildenden Tragrahmens 100, 111 schematisch dargestellt.

Das Ladebordwandsystem 10 umfaßt wenigstens ein aus zwei im wesentlichen parallel voneinander beabstandeten Tragwerken 13, 14 bestehendes Hubtragwerk 12. Weiterhin umfaßt es eine im wesentlichen plattenförmige Ladebordwand 15 zum Heben und Absenken einer Last, wobei die hier dargestellte Ladebordwand 15 ein sogenannte Klappladebordwand ist, d.h. sie kann auf die Hälfte ihrer Länge in Fahrzeuglängsrichtung, vergleiche Pfeil 112, zusammengeklappt werden. Zudem ist eine Hubaktuatoreinrichtung 16 zum Heben und Absenken der Ladebordwand 15 vorgesehen. Es kann auch eine Klappaktuatoreinrichtung 17 vorgesehen sein, wenn beispielsweise auch die Ladebordwand aus der Horizontalen in die Vertikale geklappt werden soll, was bei bestimmten Ausführungen des Ladebordwandsystems 10 der Fall sein kann, oder aber auch für den Fall vorgesehen sein kann, daß die Ladebordwand 15, wenn sie auf die Oberfläche einer Fahrbahn 115 abgesenkt wird, die Spitze der Ladebordwand 15 noch gering neigt. Liegt die Spitze der Ladebordwand auf der Fahrbahn 115, so ist keine Schwelle vorhanden, so daß Lasten leicht auf die Ladebordwand 15 aufgebracht bzw. von dieser herunterverbracht werden können. Schließlich umfaßt das Ladebordwandsystem eine im wesentlichen in Fahrzeuglängsrichtung 112, vergleiche wiederum Pfeil 112, hin und her bewegbare Schiebeeinheit 18, an der wenigstens das Hubtragwerk 12, die Ladebordwand 15 sowie wenigstens die Hubaktuatoreinrichtung 16 und, falls vorhanden, auch die Klappaktuatoreinrichtung 17 befestigt sind.

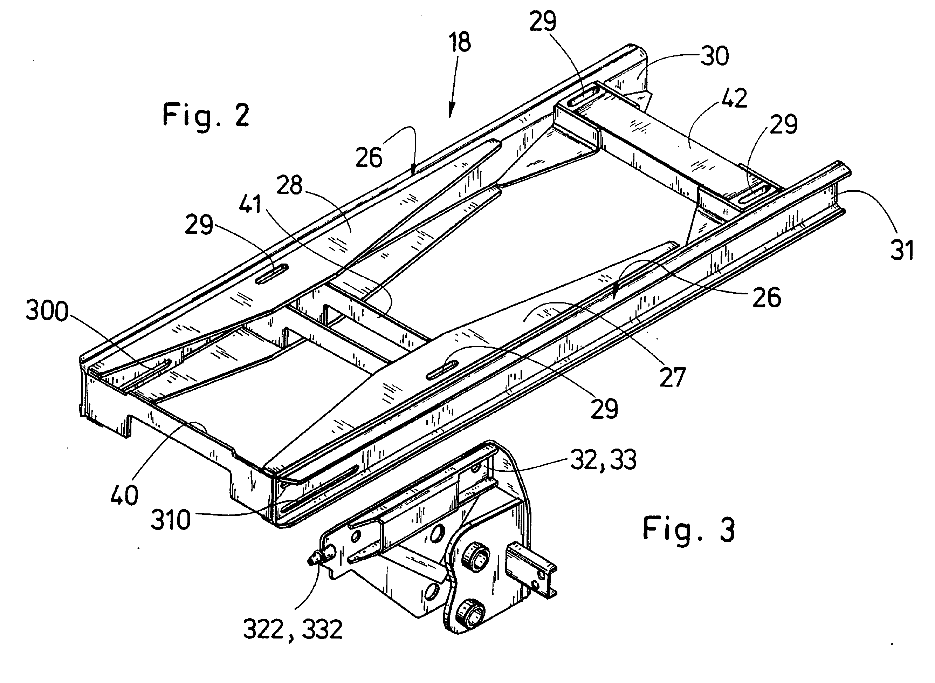

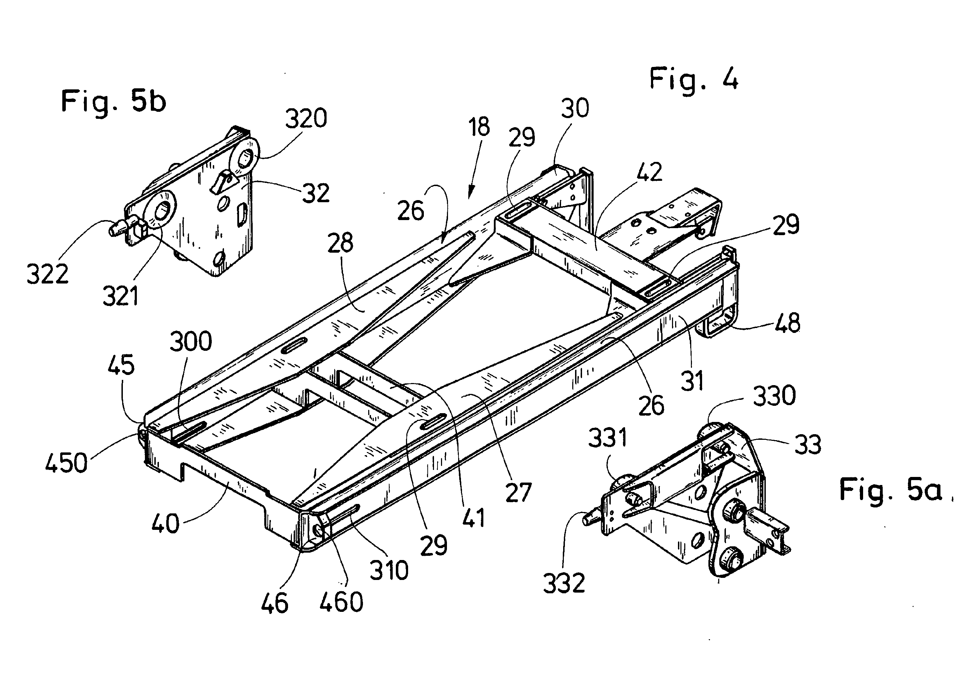

Die Schiebeeinheit 18, vergleiche Fig. 2, wird im wesentlichen durch ein rahmenförmiges Gestell aus zwei voneinander beabstandeten Führungselementen 30, 31 gebildet, die die Längsträger der Schiebeeinheit 18 bilden, und aus zwei oder mehr Querträgern 40, 41 und 42, die die Führungselemente 30, 31 miteinander beispielsweise über Schweißverbindungen verbinden. An der Schiebeeinheit 18 bzw. an den Führungselementen 30, 31 sind an der zur Traverse 18, 19, vergleiche Fig. 1 und 5, gerichteten Seite 26 jeweils Schenkel 27, 28 ausgebildet, die geeignet mit den Führungselementen 30, 31 verbunden sind, beispielsweise mittels Schweißung. Die Schenkel 27, 28 sind im wesentlichen parallel zu einem hier nicht dargestellten unteren Ende des Tragrahmens 110, 111 des Fahrzeuges 11, vergleiche Fig. 5, ausgerichtet. In den Schenkeln 27, 28 sind Langlöcher 29 ausgebildet und ebenfalls im Querträger 42.

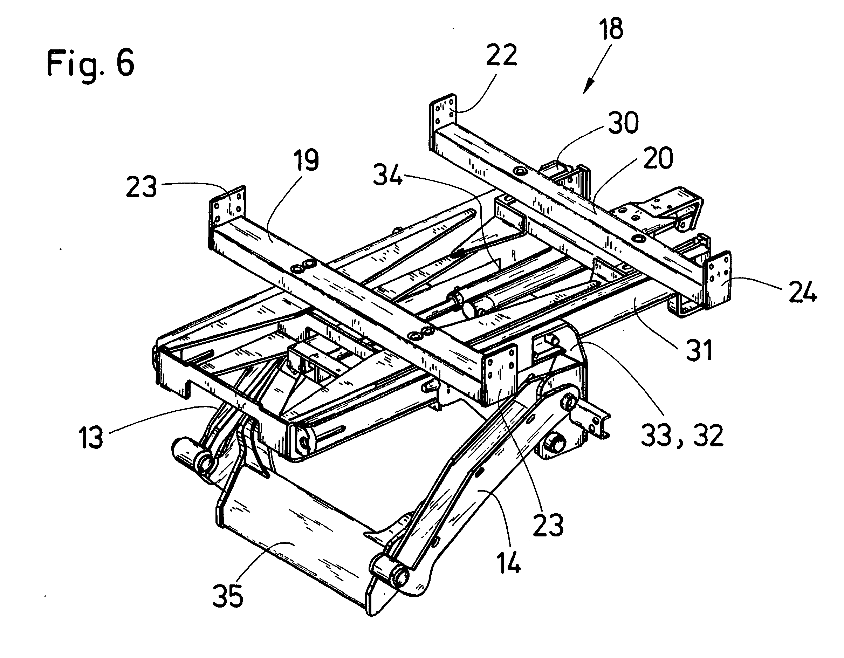

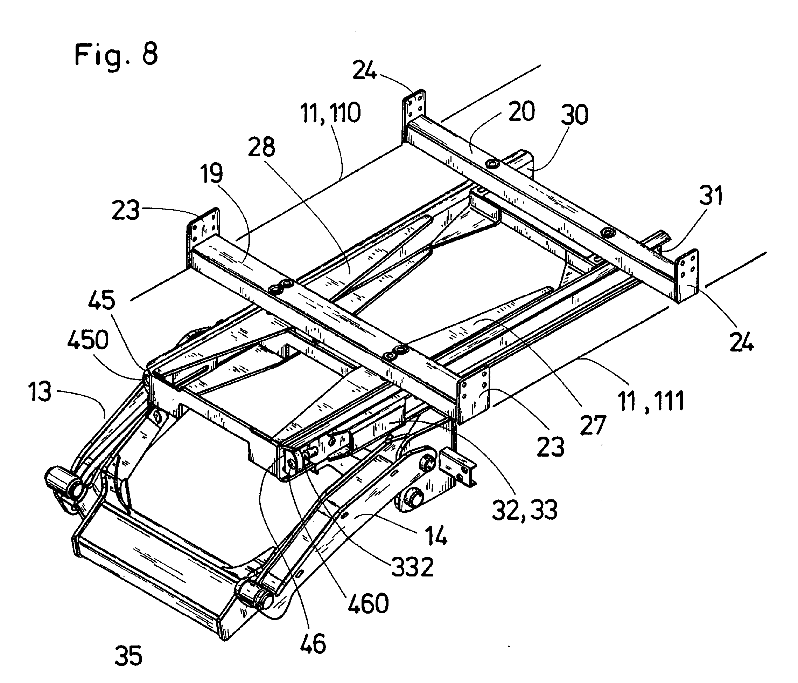

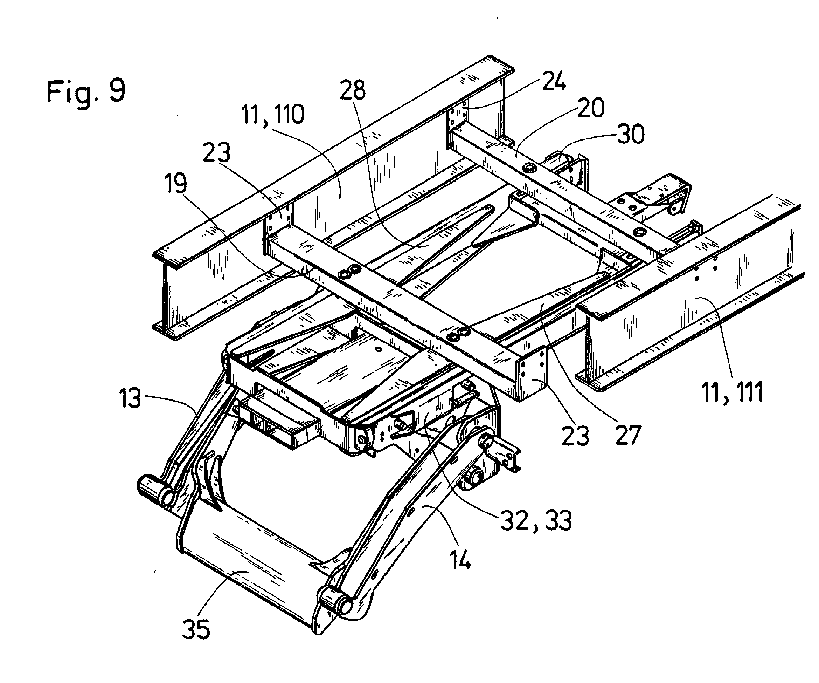

Die Schiebeeinheit 18 wird bei der in den Figuren dargestellten Ausgestaltung des Ladebordwandsystems 10 über zwei Traversen 19, 20 im wesentlichen rechtwinklig zur Längsausdehnung der Führungselemente 30, 31 verbunden, und zwar über die Schenkel 27, 28 sowie den Querträger bzw. die darin ausgebildeten Langlöcher 29 mittels hier nicht dargestellter Bolzen-Mutter-Verbindungen. An den Enden 21, 22 der Traversen 19, 20 sind Stirnelemente 23, 24 vorgesehen. Die Stirnelemente 23, 24 weisen eine vorbestimmte Anzahl von Löchern auf, über die die Traversen 19, 20 und somit die Schiebeeinheit 18 zwischen beiden Tragrahmen 110, 111 eines Fahrzeuges befestigt wird, und zwar beispielsweise mittels Bolzen-Mutter-Verbindungen, die eine leichte Montage des Ladebordwandsystems 10 am Fahrzeug 11 gestatten, vgl. Fig. 6, 8 und 9.

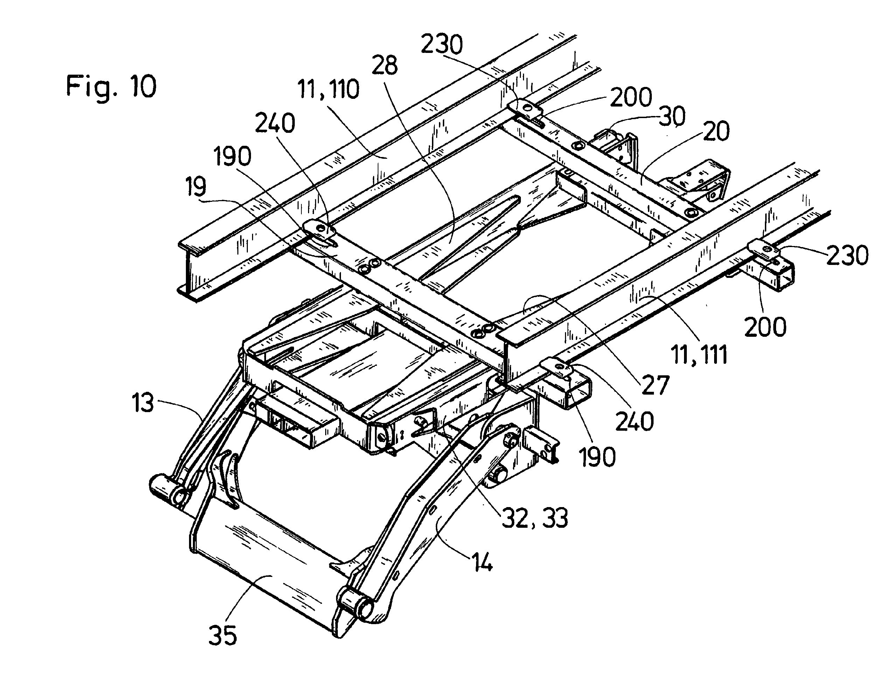

In Fig. 10 ist eine gegenüber der in den Fig. 6, 8 und 9 dargestellten Befestigung des Ladebordwandsystems 10 bzw. der Schiebeeinheit 18 am Fahrzeug 11 modifizierte Ausgestaltung der Befestigung ersichtlich. Anstelle der Stirnelemente 23, 24 sind Klemmelemente 230, 240 vorgesehen, die über Bolzen mit der jeweiligen Traverse 19, 20 über in den Traversen 19, 20 ausgebildete Langlöcher 190, 200 verbunden werden können. Die Klemmelemente 230, 240 greifen dabei beispielsweise über die unteren horizontalen Stege eines als doppelt-T-Träger beispielsweise ausgebildeten Tragrahmens 110, 111 des Fahrzeugs 11. Die Klemmelemente 230, 240 können an beiden gegenüberliegenden unteren Stegen des als doppelt-T-Trägers ausgebildet sein, was aufgrund der perspektivischen Darstellung gemäß Fig. 10 direkt nicht erkennbar ist.

In den Führungselementen 30, 31 sind längs der Führungselemente 30, 31 als Träger ausgebildete Schiebeelemente 32, 33, vergleiche Fig. 2, geführt aufgenommen.

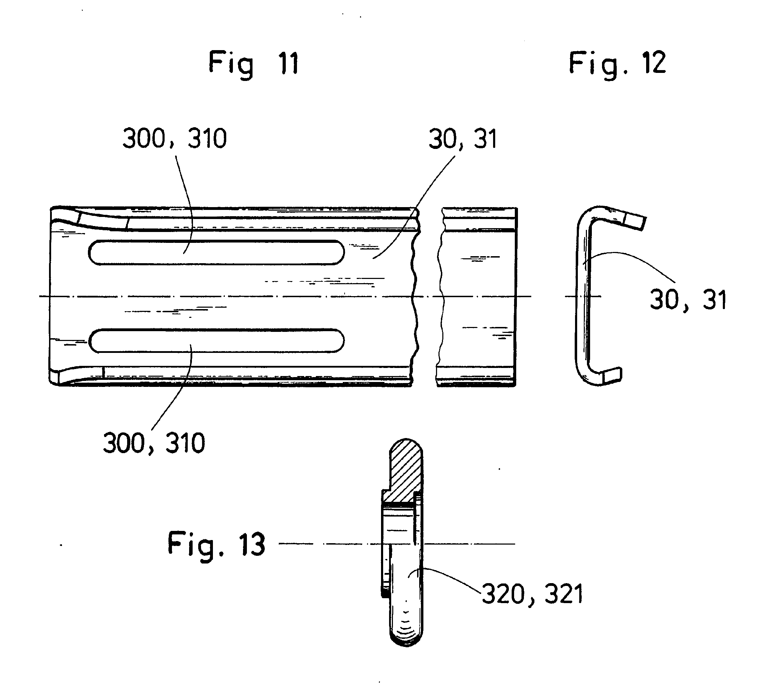

Die Führungselemente 30, 31, vgl. die Fig. 11 und 12, weisen einen im wesentlichen C-förmigen Querschnitt auf und können aus geeignet gebogenem und geeignet dimensioniertem Stahlprofil hergestellt bzw. ausgebildet werden. Die Schiebeelemente 32, 33 können in Form eines Gleitsitzes in den Führungselementen 30, 31, durch deren Schenkel geeignet geführt gleitend aufgenommen werden. Die Schiebeelemente 32, 33 können aber auch über Rollenelemente 320, 321; 330, 331 in den Führungselementen 30, 31 geführt werden, wobei eine derartige Rolle in Fig. 13 in größerer Einzelheit dargestellt ist, vgl. auch die Fig. 5a und 5b.

An den Schiebeelementen 32, 33 wird jeweils ein Tragwerk 13 bzw. 14 befestigt und jeweils ein Hubaktuator bzw. ein Klappaktuator, so daß diese so gebildeten Tragwerke 13, 14 zusammen mit den entsprechenden Anlenkpunkten an der Ladebordwand 15, vergleiche Fig. 1, jeweils ein im wesentlichen parallelogrammförmiges Hubtragwerk 12 bzw. Klapptragwerk bilden. Über die Schiebeelemente 32, 33 ist das gesamte Hubtragwerk 12 bzw. Klapptragwerk zusammen mit der Ladebordwand 15, in den Führungselementen 30, 31 jeweils längsverschiebbar, d.h. unter das Fahrzeug 11 schiebbar bzw. aus einer Endposition unter dem Fahrzeug 11 in eine Arbeitsposition herausziehbar. Dieses wird beispielsweise mittels eines Schiebeaktuators 34, vergleiche Fig. 1, bewirkt, der hier als einfacher Schiebeaktuator 34 dargestellt ist, der aber auch als sogenannter Doppeltschiebeaktuator, der beiderseitig eine axiale Verlängerung bzw. eine axiale Verkürzung ermöglicht, ausgebildet sein kann. Der Schiebeaktuator 34 kann elektrisch und/oder pneumatisch und/oder hydraulisch betrieben werden.

An den Führungselementen 30, 31 sind Anschläge 45, 46 vorgesehen, die den Ausziehhub der Schiebeelemente 32, 33 und somit der gesamten Schiebeeinheit 18 in Ausziehrichtung 113, vgl. Fig. 1, begrenzen. Die Anschläge 45, 46 die im wesentlichen in die Schiebebahn der Schiebeelemente 32, 33 in den Führungselementen 30, 31 hineinragen, weisen ein in Fahrzeuglängsrichtung 112 ausgerichtetes Loch 450, 460 auf. An den Schiebeelementen 32, 33 sind wiederum Tragstifte 322, 332 ausgebildet, deren Achse im wesentlichen in Fahrzeuglängsrichtung 112 ausgerichtet ist. Bei maximalem Ausziehhub in Ausziehrichtung 113 greifen die Tragstifte 322, 332 in die entsprechenden Löcher 450, 460 der Anschläge 45, 46 ein. Die Löcher 450, 460 und die Tragstifte 322, 332 sind in Richtung ihrer jeweiligen Achsen, d.h. im Längsquerschnitt, konisch ausgebildet, so daß dann, wenn die Tragstifte 322, 332 in der Endstellung in den Löchern 450, 460 aufgenommen sind, d.h. bei Erreichen des maximalen Ausziehhubs der Schiebeeinheit 18 in Ausziehrichtung 113, eine kraft- und formschlüssige Verbindung zwischen den Tragstiften 322, 332 und den Löchern 450, 460 hergestellt wird, so daß auf die Ladebordwand 15 beim bestimmungsgemäßen Betrieb des Ladebordwandsystems 10 einwirkende Kräfte über die Tragwerke 13, 14 und die Schiebeelemente 32, 33 direkt in die das Chassis des Fahrzeugs 11 bildenden Tragrahmen 110, 111 eingeleitet werden kann. Die Schiebeeinheit, d.h. im wesentlichen die Führungselemente 30, 31, wird bzw. werden dabei weitgehend von auf sie ohne die Anschläge 45, 46 und die Tragstifte 322, 332 einwirken würdenden erheblichen Drehmomente freigehalten.

Die Anschläge 45, 46 sind in Fahrzeuglängsrichtung 112 verstellbar angeordnet, und zwar über die Langlöcher 300, 310 in den Führungselementen 30, 31, vgl. insbesondere Fig. 11. Über hier nicht dargestellte Bolzenverbindungen, die durch die Langlöcher 300, 310 hindurchgehen, können die Anschläge 45, 46 so positioniert werden, daß Toleranzen einerseits ausgeglichen werden können und andererseits auch ein vorbestimmter maximaler Ausziehhub in Ausziehrichtung 113 der Schiebeeinheit 18 auf einfache Weise justiert und festgelegt werden kann.

Die beiden Tragwerke 13, 14, vergleiche Fig. 4, sind mittels eines Querträgers 35 miteinander verbindbar. Dazu weist der Querträger 35 an seinen beiden Enden 36, 37 Flanschstege 38, 39 auf. Über diese Flanschstege 38, 39, die mit dem Querträger 35 über Knotenbleche 43, 44 geeignet verbunden sind, beispielsweise mittels Schweißung, ist der Querträger 35 jeweils an den beiden Tragwerken 13, 14 befestigt, beispielsweise mittels Bolzen-Mutter-Verbindungen. Der Querträger 35 dient neben der Schaffung einer starren Verbindung zwischen den beiden Tragwerken 13, 14, d.h. als Maßnahme zur Sicherung einer sehr genauen Parallelführung der beiden Tragwerke 13, 14, auch als Auffahrschutz, d.h. dieser ist konstruktiv so ausgestaltet, daß er über die der Schiebeeinheit 18 abgewandten Enden 130, 140 der Tragwerke 13, 14 hinaussteht, vergleiche Fig. 5.

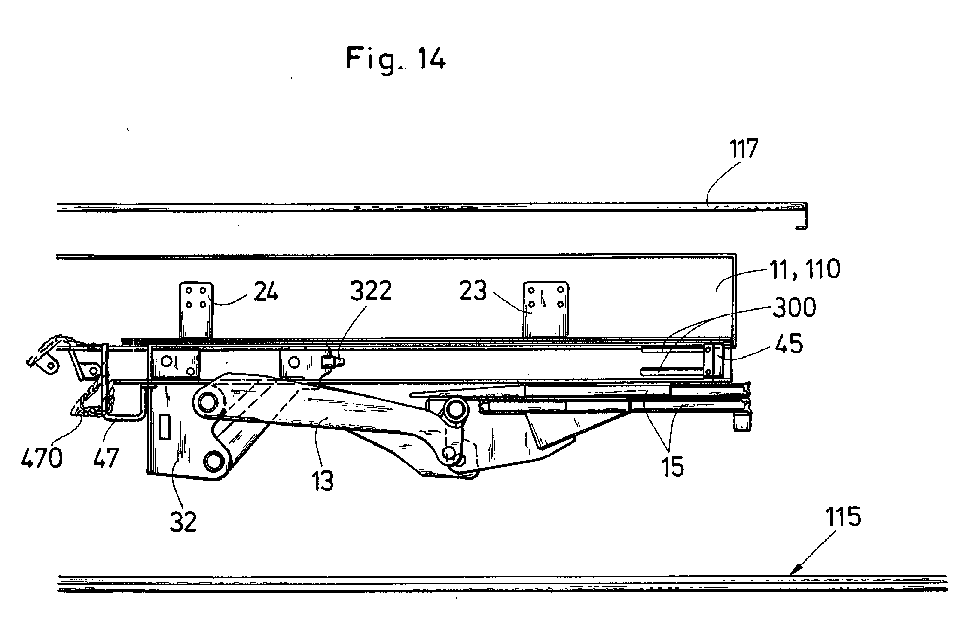

In Fahrzeuglängsrichtung 112 sind ebenfalls Hinteranschläge 47, 48 vorgesehen, die den Hineinschiebhub in Hineinschiebrichtung 114, vgl. Fig. 1, wiederum begrenzen. Auf die Hinteranschläge 47, 48 wirken wiederum die Schiebeelemente 32, 33, vgl. Fig. 14. Die Hinteranschläge 47, 48 können als integrales rohrförmiges Element ausgebildet sein und die beiden Führungselemente 31, 32 überspannen, die Hinteranschläge 47, 48 können aber auch als jeweils gesonderte Elemente 47, 38 ausgebildet sein, wie es beispielsweise in Fig. 4 ersichtlich ist. Die Hinteranschläge 47, 48 sind geeignet an den Führungselementen 30, 31 befestigt, beispielsweise durch Bolzen- Mutter- Verbindungen, oder aber mittels Schweißung und dgl.

Die Hinteranschläge 47, 48 haben nicht nur die Funktion der Begrenzung des Hineinschiebhubes der Schiebeeinheit 18, d.h. der Verschiebungsbegrenzung unter das Fahrzeug 11, vielmehr haben sie auch noch die Funktion einer die kinetische Energie absorbierenden Einrichtung, beispielsweise wenn ein fremdes Fahrzeug auf das mit dem Ladebordwandsystem 10 ausgebildete Fahrzeug 11 von hinten auffährt. Aus diesem Grunde sind die Hinteranschläge 47, 48 derart ausgebildet, daß sie inelastisch verformbar sind, d.h. wenn die durch das auffahrende Fahrzeug bedingte kinetische Energie so groß ist, daß sie oberhalb eines vorbestimmten Energiebetrages liegt. Diese Hinteranschläge 47, 48 bilden somit sogenannte Knautscheinrichtungen, wie sie insbesondere im Kraftfahrzeugbau Anwendung finden.

Im inaktiven Zustand des Ladebordwandsystems 10 befindet sich die Ladebordwand 15 im zusammengeklappten Zustand in einer zurückgezogenen Endposition unterhalb des Fahrzeuges 11, d.h. die Schiebeelemente 32, 33, an denen die Tragwerke 13, 14 und die Ladebordwand 15 befestigt sind, befinden sich in einer rechten Position gemäß der Darstellung von Fig. 1, d.h. in Hineinschiebrichtung 114 an den Hinteranschlägen 47, 48 anliegend, vgl. auch Fig. 14. Mittels des Schiebeaktuators 34, der in beiden Richtungen längs der Fahrzeuglängsrichtung betätigbar ist, werden die Führungselemente 30, 31 aus ihrer Endposition unterhalb des Fahrzeuges herausbewegt, bis die Schiebeelemente 32, 33 über ihre Tragstifte 322, 332, in die Löcher 450, 460 der vorderen Anschläge 45, 46 in Eingriff gekommen sind, vgl. wiederum Fig. 1.

Die beiden Tragwerke 13, 14 und damit die Ladebordwand 15 werden dann geeignet auf die Fahrbahn 115 abgesenkt und die Ladebordwand wird dann in ihre aufgefaltete Position, vergleiche Fig. 1, gebracht. In der herausgezogenen Stellung, in Ausziehrichtung 113, vergleiche Fig. 1, ist dann das Ladebordwandsystem 10 betriebsbereit und kann auf bestimmungsgemäße Weise betätigt werden.

### Bezugszeichenliste

- 10: Ladebordwandsystem
- 11: Fahrzeug
- 110: Tragrahmen
- 111: Tragrahmen
- 112: Fahrzeuglängsrichtung
- 113: Ausziehrichtung
- 114: Hineinschiebrichtung
- 115: Fahrbahn
- 117: Ladefläche
- 12: Hubtragwerk
(ggf. auch Klapptragwerk)
- 13: erstes Tragwerk
- 130: erstes Ende
- 14: zweites Tragwerk
- 140: erstes Ende
- 15: Ladebordwand
- 16: Hubaktuator
- 17: Klappaktuator
- 18: Schiebeeinheit
- 19: Traverse
- 190: Langloch
- 20: Traverse
- 200: Langloch
- 21: Ende Traverse
- 22: Ende Traverse
- 23: Stirnelement
- 230: Klemmelement
- 24: Stirnelement
- 240: Klemmelement
- 25: Klemmelement
- 26: Seite (zur Traverse gerichtet)
- 27: Schenkel
- 28: Schenkel
- 29: Langloch
- 30: Führungselement
- 300: Langloch
- 31: Führungselement
- 310: Langloch
- 32: Schiebeelement
- 320: Radelement
- 321: Radelement
- 322: Tragstift
- 33: Schiebeelement
- 330: Radelement
- 331: Radelement
- 332: Tragstift
- 34: Schiebeaktuator
- 35: Querträger
- 36: Ende (Querträger)
- 37: Ende (Querträger)
- 38: Flanschsteg
- 39: Flanschsteg
- 40: Querträger
- 41: Querträger
- 42: Querträger
- 43: Knotenblech
- 44: Knotenblech
- 45: Anschlag
- 450: Loch
- 46: Anschlag
- 460: Loch
- 47: Hinteranschlag
- 48: Hinteranschlag

## Patentansprüche

1. Ladebordwandsystem (10) zur Befestigung an Fahrzeugen (11), insbesondere Lastkraftfahrzeugen, umfassend wenigstens ein aus zwei im wesentlichen parallel voneinander beabstandeten Tragwerken (13, 14) bestehendes Hubtragwerk (12), eine im wesentlichen plattenförmige Ladebordwand (15) zum Heben und Absenken einer Last, wenigstens eine Hubaktuatoreinrichtung (16) zum Heben und Senken der Ladebordwand (15) sowie eine am Tragrahmen (110, 111) des Fahrzeugs (11) befestigbare Schiebeeinheit (18), an der wenigstens das Hubtragwerk (12), die Ladebordwand (15) und die Hubaktuatoreinrichtung (16) im wesentlichen in Fahrzeuglängsrichtung (112) auszieh- und einschiebbar befestigt sind, die wenigstens zwei im wesentlichen parallel voneinander beabstandete, als Träger wenigstens des Hubtragwerks (12), der Ladebordwand (15) und der Hubaktuatoreinrichtung (16) ausgebildete, in Auszieh- und Einschiebrichtung (113, 114) verschiebbare Schiebeelemente (32, 33) umfaßt, und die wenigstens in Ausziehrichtung (113) der Schiebeelemente (32, 33) wirkende, deren Ausziehhub begrenzende Anschläge (45, 46) aufweist, **dadurch gekennzeichnet, daß** die Anschläge (45, 46) jeweils ein quer zur Ausziehrichtung (113) ausgerichtetes Loch (450, 460) aufweisen, in das bei maximalem Ausziehhub ein jeweils an den Schiebeelementen (32, 33) ausgebildeter Tragstift (322, 332) eingreift.

2. Ladebordwandsystem nach Anspruch 1, **dadurch gekennzeichnet, daß** die Schiebeeinheit (18) über wenigstens eine Traverse (19, 20), die den Abstand zwischen zwei den Tragrahmen (110, 111) im wesentlichen bildenden Trägern überspannt, an dem Tragrahmen (111, 112) befestigt ist.

3. Ladebordwandsystem nach Anspruch 2, **dadurch gekennzeichnet, daß** die Traverse (19, 20) an ihren beiden Enden (21, 22) mit der Traverse (19, 20) verbundene Stirnelemente (23, 24) aufweist, über die die Traverse (19, 20) an dem den Tragrahmen (110, 111) bildenden Tragarm befestigt ist.

4. Ladebordwandystem nach einem oder beiden der Ansprüche 1 oder 2, **dadurch gekennzeichnet, daß** die Schiebeeinheit (18) über klauenartig ausgebildete Klemmelemente (25), die über horizontale Stege der den Tragrahmen (110, 111) bildenden Trägern greifen, lösbar befestigbar ist.

5. Ladebordwandsystem nach einem oder mehreren der Ansprüche 2 bis 4, **dadurch gekennzeichnet, daß** die Traverse (19, 20) längenverschiebbar ausgebildet ist.

6. Ladebordwandsystem nach einem oder mehreren der Ansprüche 2 bis 5, **dadurch gekennzeichnet, daß** die Traverse (19, 20) an der Schiebeeinheit (18) derart befestigt ist, daß diese sich bei Krafteinwirkung im wesentlichen in Fahrzeuglängsrichtung (112) bei Überschreiten eines vorbestimmten Kraftbetrages gegenüber dem Tragrahmen (110, 111) im wesentlichen in Fahrzeuglängsrichtung (112) bewegen kann.

7. Ladebordwandsystem nach Anspruch 6, **dadurch gekennzeichnet, daß** die Schiebeeinheit (18) an ihrer zur Traverse (19, 20) gerichteten Seite (26) wenigstens zwei gegenüberliegende, voneinander beabstandete Schenkel (27, 28) aufweist, in der Langlöcher (29) zur Befestigung der Traverse (19, 20) ausgebildet sind.

8. Ladebordwandsystem nach einem oder mehreren der Ansprüche 1 bis 7, **dadurch gekennzeichnet, daß** die Träger als relativ zum Fahrzeug (11) feststehende Führungselemente (30, 31) ausgebildet sind und die wenigstens zwei im wesentlichen parallel voneinander beabstandeten, als Träger ausgebildeten, relativ zum Fahrzeug (11) längsverschiebbaren Schiebeelemente (32, 33), in den Führungselementen (30, 31) geführt hin und her bewegbar sind.

9. Ladebordwandsystem nach Anspruch 8, **dadurch gekennzeichnet, daß** die Führungselemente (30, 31) einen im wesentlichen C-förmigen Querschnitt aufweisen.

10. Ladebordwandsystem nach einem oder beiden der Ansprüche 8 oder 9, **dadurch gekennzeichnet, daß** die Schiebeelemente (32, 33) in den Führungselementen (30, 31) gleitend geführt werden.

11. Ladebordwandsystem nach einem oder beiden der Ansprüche 8 oder 9, **dadurch gekennzeichnet, daß** die Schiebeelemente (32, 33) in den Führungselementen (30, 31) über an den Schiebeelementen (32, 33) befestigte Radelemente (320, 321, 330, 331) geführt werden.

12. Ladebordwandsystem nach einem oder mehreren der Ansprüche 1 bis 11, **dadurch gekennzeichnet, daß** die Löcher (450, 460) und die Tragstifte (322, 332) im Längsquerschnitt konisch ausgebildet sind.

13. Ladebordwandsystem nach einem oder mehreren der Ansprüche 1 bis 12, **dadurch gekennzeichnet, daß** die Anschläge (45, 46) in Fahrzeuglängsrichtung (112) verstellbar angeordnet sind.

14. Ladebordwandsystem nach einem oder mehreren der Ansprüche 1 bis 13, **dadurch gekennzeichnet, daß** die Schiebeeinheit (18) in Fahrzeuglängsrichtung (112) wenigstens in Hineinschiebrichtung (114) der Schiebeelemente (32, 33) wirkende, deren Hineinschiebhub begrenzende Hinteranschläge (47, 48) aufweist.

15. Ladebordwandsystem nach Anspruch 14, **dadurch gekennzeichnet, daß** die Hinteranschläge (47, 48) bei Krafteinwirkung durch die Schiebeelemente (32, 33) oberhalb eines unbestimmten Betrages in Fahrzeuglängsrichtung (112) derart ausgebildet sind, daß sie sich inelastisch verformen.

16. Ladebordwandsystem nach einem oder mehreren der Ansprüche 1 bis 15, **dadurch gekennzeichnet, daß** die Schiebeeinheit (18) mittels eines Schiebeaktuators (34) hin und her bewegbar ist.

17. Ladebordwandsystem nach Anspruch 16, **dadurch gekennzeichnet, daß** der Schiebeaktuator (34) durch wenigstens ein pneumatisch und/oder hydraulisch betriebenes Kolben-Zylinder-System gebildet wird.

18. Ladebordwandsystem nach einem oder mehreren der Ansprüche 1 bis 17, **dadurch gekennzeichnet, daß** ein die Tragwerke (13, 14) miteinander verbindender Querträger (35) vorgesehen ist.

19. Ladebordwandsystem nach Anspruch 18, **dadurch gekennzeichnet, daß** der Querträger (35) im Bereich der der Schiebeeinheit (18) abgewandten Enden (130, 140) der Tragwerke (13, 14) angeordnet ist.

20. Ladebordwandsystem nach Anspruch 19, **dadurch gekennzeichnet, daß** der Querträger (35) als Auffahrschutzelement ausgebildet ist.

21. Ladebordwandsystem nach einem oder mehreren der Ansprüche 1 bis 20, **dadurch gekennzeichnet, daß** der Querträger (35) einen im wesentlichen rechteckigen Querschnitt aufweist.

22. Ladebordwandsystem nach einem oder mehreren der Ansprüche 18 bis 21, **dadurch gekennzeichnet, daß** der Querträger (35) an seinen beiden Enden (36, 37) mit jeweils einem Flanschsteg (38, 39) versehen ist, über die er jeweils an einem Tragwerk (13, 14) befestigt ist.

## Claims

1. Loading tailgate system (10) for attaching to motor vehicles (11), in particular heavy goods vehicles, with at least one lifting frame (12) comprising two support frames (13, 14) spaced apart from one another essentially parallel, an essentially board-shaped loading tailgate (15) for raising and lowering a load, at least one lifting actuator mechanism (16) for raising and lowering the loading tailgate (15) as well as a sliding unit (18) which can be attached to the support frame (110, 111) of the vehicle (11), to which at least the lifting frame (12), the loading tailgate (15) and the lifting actuator mechanism (16) are attached so as to be extractable and retractable essentially in the vehicle longitudinal direction (112) and which essentially comprises two sliding elements (32, 33) spaced apart from one another essentially parallel serving as supports for at least the lifting frame (12), the loading tailgate (15) and the lifting actuator mechanism (16) and which are able to slide in the extraction and retraction direction (113, 114), and which has stops (45, 46) acting at least in the extraction direction (113) of the sliding elements (32, 33) to restrict the extraction stroke thereof, **characterised in that** the stops (45, 46) each have an orifice (450, 460) oriented transversely to the extraction direction (113) in which a bearing pin (322, 332) provided on the sliding elements (32, 33) respectively engages when the extraction stroke is at its maximum.

2. Loading tailgate system as claimed in claim 1, **characterised in that** the sliding unit (18) is attached to the support frame (111, 112) by means of at last one cross-member (19, 20) which spans the distance between two supports essentially constituting the support frame (110, 111).

3. Loading tailgate system as claimed in claim 2, **characterised in that** the cross-member (19, 20) has terminal elements (23, 24) connected to the cross-member (19, 20) at its two ends (21, 22), by means of which the cross-member (19, 20) is attached to the support arm constituting the support frame (110, 111).

4. Loading tailgate system as claimed in one of both of claims 1 or 2, **characterised in that** the sliding unit (18) can be detachably fitted by means of claw-type clamping elements (25) which engage the supports constituting the support frame (110, 111) by means of horizontal webs.

5. Loading tailgate system as claimed in one or more of claims 2 to 4, **characterised in that** the cross-member (19, 20) is designed so that it can slide longitudinally.

6. Loading tailgate system as claimed in one or more of claims 2 to 5, **characterised in that** the cross-member (19, 20) is attached to the sliding unit (18) so that, when a force acts on it, it is able to move essentially in the vehicle longitudinal direction (112) relative to the support frame (110, 111) once a predetermined amount of force is exceeded.

7. Loading tailgate system as claimed in claim 6, **characterised in that** the sliding unit (18) has at least two, oppositely lying legs (27, 28) spaced apart from one another on its side (26) directed towards the cross-member (19, 20), in which slots (29) are provided for mounting the cross-member (19, 20).

8. Loading tailgate system as claimed in one or more of claims 1 to 7, **characterised in that** the supports are provided in the form of guide elements (30, 31) which are stationary relative to the vehicle (11) and the at least two sliding elements (32, 33) serving as essentially parallel supports spaced apart from one another which are longitudinally slidable relative to the vehicle (11) can be moved backwards and forwards, guided in the guide elements (30, 31).

9. Loading tailgate system as claimed in claim 8, **characterised in that** the guide elements (30, 31) have an essentially C-shaped cross-section.

10. Loading tailgate system as claimed in one or both of claims 8 or 9, **characterised in that** the sliding elements (32, 33) are slidingly guided in the guide elements (30, 31).

11. Loading tailgate system as claimed in one or both of claims 8 or 9, **characterised in that** the sliding elements (32, 33) are guided in the guide elements (30, 31) by means of wheel elements (320, 321, 330, 331) attached to the sliding elements (32, 33).

12. Loading tailgate system as claimed in one or more of claims 1 to 11, **characterised in that** the orifices (450, 460) and the bearing pins (322, 332) are of a conical shape in the longitudinal cross-section.

13. Loading tailgate system as claimed in one or more of claims 1 to 12, **characterised in that** the stops (45, 46) are mounted so as to be displaceable in the vehicle longitudinal direction (112).

14. Loading tailgate system as claimed in one or more of claims 1 to 13, **characterised in that** the sliding unit (18) has rear stops (47, 48) in the vehicle longitudinal direction (112) restricting the retraction stroke of the sliding elements (32, 33), at least in their retraction direction (114).

15. Loading tailgate system as claimed in claim 14, **characterised in that** the rear stops (47, 48) are designed so that they non-elastically deform when a force acting on them via the sliding elements (32, 33) exceeds an indefinite amount in the vehicle longitudinal direction (112).

16. Loading tailgate system as claimed in one or more of claims 1 to 15, **characterised in that** the sliding unit (18) can be moved backwards and forwards by means of a slide actuator (34).

17. Loading tailgate system as claimed in claim 16, **characterised in that** the slide actuator (34) is provided in the form of at least one pneumatically and/or hydraulically operated piston-cylinder system.

18. Loading tailgate system as claimed in one or more of claims 1 to 17, **characterised in that** a cross-member (35) is provided to connect the support frames (13, 14) to one another.

19. Loading tailgate system as claimed in claim 18, **characterised in that** the cross-member (35) is disposed in the region of the ends (130, 140) of the support frames (13, 14) remote from the sliding unit (18).

20. Loading tailgate system as claimed in claim 19, **characterised in that** the cross-member (35) is provided in the form of an anti-collision element.

21. Loading tailgate system as claimed in one or more of claims 1 to 20, **characterised in that** the cross-member (35) has an essentially rectangular cross-section.

22. Loading tailgate system as claimed in one or more of claims 18 to 21, **characterised in that** the cross-member (35) is provided with a flange web (38, 39) at its two ends (36, 37), by means of which it is attached respectively to a support frame (13, 14).

## Revendications

1. Système de hayon élévateur (10) destiné à être fixé sur des véhicules (11), notamment des véhicules utilitaires, comportant au moins un châssis élévateur (12) constitué de deux châssis (13, 14) sensiblement parallèles et mutuellement distants, un hayon élévateur (15) sensiblement en forme de plaque destiné à élever et abaisser une charge, au moins un dispositif d'actionnement d'élévation (16) destiné à élever et abaisser le hayon élévateur (15) ainsi qu'une unité de glissement (18) pouvant être fixée sur le cadre porteur (110, 111) du véhicule (11), unité sur laquelle au moins le châssis élévateur (12), le hayon élévateur (15) et le dispositif d'actionnement d'élévation (16) sont fixés de manière à pouvoir être extraits et être insérés sensiblement dans la direction longitudinale du véhicule (112), qui comporte au moins deux éléments coulissants (32, 33) mobiles dans les directions d'extraction et d'insertion (113, 114), mutuellement distants et sensiblement parallèles, conçus comme supports au moins du châssis élévateur (12), du hayon élévateur (15) et du dispositif d'actionnement d'élévation (16), et qui comprend des butées (45, 46) à effet au moins dans la direction d'extraction (113) des éléments coulissants (32, 33), limitant l'élévation d'extraction de ceux-ci, **caractérisé en ce que** les butées (45, 46) comprennent chacune un trou (450, 460) orienté transversalement à la direction d'extraction (113), trou dans lequel, lorsque l'élévation d'extraction est maximale, se met en prise une cheville porteuse (322, 332) installée sur les éléments coulissants (32, 33) respectifs.

2. Système de hayon élévateur selon la revendication 1, **caractérisé en ce que** l'unité de glissement (18) est fixée au cadre porteur (111, 112) par au moins une traverse (19, 20) qui couvre la distance entre deux supports formant sensiblement le cadre porteur (110, 111).

3. Système de hayon élévateur selon la revendication 2, **caractérisé en ce que** la traverse (19, 20) comprend, sur ses deux extrémités (21, 22), des éléments frontaux (23, 24) reliés à la traverse (19, 20), par l'intermédiaire desquels la traverse (19, 20) est fixée au bras porteur formant le cadre porteur (110, 111).

4. Système de hayon élévateur selon l'une des revendications 1 et 2 ou les deux, **caractérisé en ce que** l'unité de glissement (18) peut être fixée de manière amovible par des éléments de serrage (25) conçus en forme de griffes qui effectuent la préhension par l'intermédiaire de nervures horizontales des supports formant le cadre porteur (110, 111).

5. Système de hayon élévateur selon l'une ou plusieurs des revendications 2 à 4, **caractérisé en ce que** la traverse (19, 20) est conçue de manière à pouvoir coulisser en longueur.

6. Système de hayon élévateur selon l'une ou plusieurs des revendications 2 à 5, **caractérisé en ce que** la traverse (19, 20) est fixée sur l'unité de glissement (18) de telle sorte que celle-ci peut se déplacer sensiblement dans la direction longitudinale du véhicule (112), si on exerce une force sensiblement dans la direction longitudinale de véhicule (112) en dépassant un degré de force prédéfini par rapport au cadre porteur (110, 111).

7. Système de hayon élévateur selon la revendication 6, **caractérisé en ce que** l'unité de glissement (18) comprend, sur son côté (26) orienté vers la traverse (19, 20), au moins deux branches (27, 28) opposées, distantes l'une de l'autre, branches dans lesquelles sont ménagés des trous oblongs (29) destinés à fixer la traverse (19, 20).

8. Système de hayon élévateur selon l'une ou plusieurs des revendications 1 à 7, **caractérisé en ce que** les supports sont conçus comme des éléments de guidage (30, 31) fixes par rapport au véhicule (11) et les au moins deux éléments coulissants (32, 33), distants l'un de l'autre sensiblement parallèlement, conçus comme des supports, mobiles en longueur par rapport au véhicule (11), peuvent se déplacer en va-et-vient en étant guidés dans les éléments de guidage (30, 31).

9. Système de hayon élévateur selon la revendication 8, **caractérisé en ce que** les éléments de guidage (30, 31) présentent une section transversale sensiblement en forme de C.

10. Système de hayon élévateur selon l'une des revendications 8 et 9 ou les deux, **caractérisé en ce que** les éléments coulissants (32, 33) sont guidés en glissement dans les éléments de guidage (30, 31).

11. Système de hayon élévateur selon l'une des revendications 8 et 9 ou les deux, **caractérisé en ce que** les éléments coulissants (32, 33) sont guidés dans les éléments de guidage (30, 31) par l'intermédiaire d'éléments de roue (320, 321, 330, 331) fixés aux éléments coulissants (32, 33).

12. Système de hayon élévateur selon l'une ou plusieurs des revendications 1 à 11, **caractérisé en ce que** les trous (450, 460) et les chevilles porteuses (322, 332) sont formées de manière conique en section transversale longitudinale.

13. Système de hayon élévateur selon l'une ou plusieurs des revendications 1 à 12, **caractérisé en ce que** les butées (45, 46) sont disposées de manière à pouvoir se déplacer dans la direction longitudinale du véhicule (112).

14. Système de hayon élévateur selon l'une ou plusieurs des revendications 1 à 13, **caractérisé en ce que** l'unité de glissement (18) dans la direction longitudinale du véhicule (112) comprend des butées arrière (47, 48) à effet au moins dans la direction d'insertion par glissement (114) des éléments coulissants (32, 33), limitant l'élévation d'insertion par glissement de ceux-ci.

15. Système de hayon élévateur selon la revendication 14, **caractérisé en ce que** les butées arrière (47, 48), si une force est exercée par les éléments coulissants (32, 33) au-dessus d'un certain degré indéfini dans la direction longitudinale du véhicule (112), sont conçues de telle sorte qu'elles se déforment de manière inélastique.

16. Système de hayon élévateur selon l'une ou plusieurs des revendications 1 à 15, **caractérisé en ce que** l'unité coulissante (18) peut être déplacée en va-et-vient au moyen d'un actionneur de glissement (34).

17. Système de hayon élévateur selon la revendication 16, **caractérisé en ce que** l'actionneur de glissement (34) est formé par au moins un système de vérin type à piston actionné de manière pneumatique et/ou hydraulique.

18. Système de hayon élévateur selon l'une ou plusieurs des revendications 1 à 17, **caractérisé en ce qu'**il est prévu une barre transversale (35) reliant les châssis (13, 14) l'un à l'autre.

19. Système de hayon élévateur selon la revendication 18, **caractérisé en ce que** la barre transversale (35) est disposée dans la zone des extrémités (130, 140) des châssis (13, 14) opposées à l'unité de glissement (18).

20. Système de hayon élévateur selon la revendication 19, **caractérisé en ce que** la barre transversale (35) est conçue comme un élément anti-tamponnage.

21. Système de hayon élévateur selon l'une ou plusieurs des revendications 1 à 20, **caractérisé en ce que** la barre transversale (35) comprend une section transversale sensiblement rectangulaire.

22. Système de hayon élévateur selon l'une ou plusieurs des revendications 18 à 21, **caractérisé en ce que** la barre transversale (35) est pourvue, sur ses deux extrémités (36, 37), d'une nervure de bride (38, 39) respective, par l'intermédiaire de laquelle elle est fixée respectivement à un châssis (13, 14).
